(19) Europäisches Patentamt

**European Patent Office**

**Office européen des brevets**

(11) Veröffentlichungsnummer: **0 169 918**
**B1**

(12) **EUROPÄISCHE PATENTSCHRIFT**

(45) Veröffentlichungstag der Patentschrift:
**27.09.89**

(21) Anmeldenummer: **84108985.7**

(22) Anmeldetag: **28.07.84**

(51) Int. Cl.⁴: **E 06 B 1/02**, E 06 B 9/24,
E 06 B 3/26

(54) **Wärmedämmendes Fenster.**

(43) Veröffentlichungstag der Anmeldung:
**05.02.86 Patentblatt 86/6**

(45) Bekanntmachung des Hinweises auf die Patenterteilung:
**27.09.89 Patentblatt 89/39**

(84) Benannte Vertragsstaaten:
**AT BE CH DE FR GB IT LI LU NL SE**

(56) Entgegenhaltungen:
**EP-A- 0 089 657**
**DE-A- 2 263 514**
**DE-A- 2 302 067**
**DE-A- 2 559 075**
**DE-A- 2 921 869**
**FR-A- 2 294 316**
**FR-A- 2 352 124**
**GB-A- 1 079 504**
**US-A- 3 961 659**

(73) Patentinhaber: **Weiblen, Rolf-Diether, Eltener Strasse 1,**
**D-4330 Mülheim/Ruhr (DE)**

(72) Erfinder: **Weiblen, Rolf-Diether, Eltener Strasse 1,**
**D-4330 Mülheim/Ruhr (DE)**

(74) Vertreter: **Selting, Günther, Dipl.-Ing. et al,**
**Deichmannhaus am Hauptbahnhof, D-5000 Köln 1 (DE)**

## Beschreibung

Die Erfindung betrifft ein wärmedämmendes Fensterelement in einer Wandöffnung eines Gebäudes, mit einem Aussenfenster mit Blendrahmen und mit einem im Fensterraum hinter dem Fenster angeordneten Vorhang, der von einem über dem Fensterraum angeordneten Hilfsraum in den Fensterraum abwickelbar und in seitlichen Führungselementen geführt ist, wobei der Blendrahmen des Aussenfensters an einer die Wandöffnung umfangsmässig begrenzenden Blockzarge befestigt ist und die seitlichen Führungselemente an der Blockzarge angeordnet sind.

Ein wesentlicher Teil der Wärmeverluste an Gebäuden tritt im Bereich der Fenster auf. Andererseits haben die Fenster auch die Funktion von Sonnenkollektoren, indem sie einfallende Wärmestrahlung durchlassen, die im Gebäudeinneren in Wärme umgesetzt wird.

Es ist bekannt, an einem Fenster einen wärmedämmenden Vorhang aus mehreren Vorhangbahnen zu montieren, die von Rollen abgewickelt werden und parallel zum Fenster verlaufende Luftkammern bilden können, in denen stehende Luftpolster erzeugt werden. Ein solcher wärmedämmender Vorhang aus mehreren Luftkammern kann z.B. nachts aufgespannt werden, um die im Gebäude vorhandene Wärme daran zu hindern, an den Glasflächen des Gebäudes auszutreten. Bei Sonneneinstrahlung kann der Vorhang aufgerollt werden, so dass die Wärmestrahlung ungehindert in das Gebäudeinnere gelangen kann. Die bekannten wärmedämmenden Vorhänge werden separat hinter einem Fenster angebracht und erfordern eine eigene Stützkonstruktion, die separat von dem Fenster im Gebäudeinnern montiert wird.

Herkömmliche Fensterrahmen werden üblicherweise in Wandöffnungen mit Wandhaken verankert. Dabei bleiben in der Regel um ein Fenster herum breite Spalte frei, die mit einem Isolierschaum ausgefüllt werden und anschliessend verputzt werden müssen. An diesen Stellen können wegen mangelhafter Isolierung oft Wärmeverluste auftreten. Ferner entsprechen Wandöffnungen häufig nicht den im Architektenplan vorgegebenen Massen.

Aus der EP-A 0 089 657 ist ein wärmedämmender Vorhang für Fenster bekannt, der hinter einem Fenster angeordnet wird. Dieser wärmedämmende Vorhang weist mehrere parallele Vorhangbahnen auf, die in den Fensterraum hinter dem Fenster abgewickelt werden können. Der Einbau ist hinter einem Fenster, innerhalb der für das Fenster ausgesparten Wandöffnung vorgesehen. Die ·Wandöffnung selbst weist keine Blockzarge für den Blendrahmen des Fensters auf. Die seitlichen Führungselemente für die einzelnen Vorhangbahnen ragen in den Fensterraum hinein und verringern dadurch den Lichteinfall. Der wärmedämmende Vorhang wird in die freie Fensteröffnung der Wand eingesetzt, so dass die Vorhangbahnen nicht breiter sein können als der Blendrahmen des Fensters. Dadurch ist nur eine Wärmedämmung des unmittelbaren Fensterbereichs zur Isolierung der Glasflächen möglich. Schliesslich weist der bekannte wärmedämmende Vorhang auch keine Abschlussprofile am unteren Ende der Fensteröffnung auf, in die die unteren Kanten der Vorhangbahnen im abgewickelten Zustand eintauchen.

Aus der DE-A 2 302 067 und der DE-A 2 263 514 sind Fensterelemente bekannt, bei denen der Blendrahmen des Fensters an einer Aussen- oder Blockzarge befestigt ist, die die Wandöffnung für das Fensterelement begrenzt.

Aus der FR-A 2 294 316 ist ein Lärmschutzfenster bekannt, bei dem zwischen zwei Doppelfenstern eine Lichtschutzfolie angeordnet ist. Der Blendrahmen des Aussenfensters ist dabei an einer schmalen Aussenzarge befestigt.

Der Erfindung liegt die Aufgabe zugrunde, ein wärmedämmendes Fenster der eingangs genannten Art zu schaffen, das die Wärmedämmung im Rahmenbereich verbessert und die bauseitige Montage vereinfacht und dadurch die Herstellkosten für ein Gebäude senkt.

Diese Aufgabe wird erfindungsgemäss gelöst durch ein wärmedämmendes Fensterelement in einer Wandöffnung eines Gebäudes, mit einem Aussenfenster mit Blendrahmen und mit einem im Fensterraum hinter dem Fenster angeordneten Vorhang, der von einem über dem Fensterraum angeordneten Hilfsraum in den Fensterraum abwickelbar und in seitlichen Führungselementen geführt ist, wobei der Blendrahmen des Aussenfensters an einer die Wandöffnung umfangsmässig begrenzenden Blockzarge befestigt ist und die seitlichen Führungselemente an der Blockzarge angeordnet sind, wobei der Vorhang aus mehreren Vorhangbahnen besteht, die von mindestens einer Rolle abwickelbar sind, der Hilfsraum von dem Fensterraum durch eine Zwischenwand mit Schlitzen für den Durchtritt der Vorhangbahnen und mit Führungselementen zum Spreizen der einzelnen Vorhangbahnen abgetrennt ist, am unteren Ende des Fensterraums unterhalb des Blendrahmens horizontale Abschlussprofile angeordnet sind, in die die unteren Kanten der Vorhangbahnen im abgewickelten Zustand eintauchen, und die Vorhangbahnen derart breiter sind als der Blendrahmen, dass eine Wärmedämmung auch im Bereich der Fenstereinfassung erfolgt.

Die in den Fensterraum abrollbaren Vorhangbahnen sind breiter als der Blendrahmen des Aussenfensters. Dadurch wird nicht nur die Wärmedämmung des Fensters selbst, sondern des gesamten Fensterelementes, einschliesslich Blendrahmen und Blockzarge, verbessert. Dabei ist eine Überdeckung der Wärmedämmung aufgrund der Vorhänge mit der Wärmedämmung der Aussenwand möglich. Da die Vorhangbahnen breiter sind als der Blendrahmen, wird auch verhindert, dass ein Lichtverlust durch in den Fensterbereich hineinragende seitliche Führungselemente eintritt. Die Abschlussprofile sind ausserdem unterhalb des Blendrahmens angeordnet, so dass auch am unteren Ende des Fensterraumes eine Wärmedämmung über den Blendrahmen hinaus erfolgt.

Die Erfindung ermöglicht folglich ein wärmedämmendes Fensterelement, bei dem mehrere Vorhangbahnen in den Fensterraum abwickelbar sind, die in Verbindung mit den vertikalen Führungsprofilen und den horizontalen Abschlussprofilen wärmedämmende Luftkammern bilden, die nicht nur den unmittelbaren Bereich des Glasfensters isolieren, sondern darüber hinaus auch noch den Blendrahmen und die Blockzarge. Die vertikalen Führungsprofile sind an der Blockzarge befestigt und können deswegen seitlich so weit zurückliegen, dass sie den Lichteinfall durch das Fenster nicht beeinträchtigen.

Die Blockzarge kann beim erfindungsgemässen Wandbauelement nach dem Einziehen eines Bodens bzw. einer Zwischendecke und vor dem Hochziehen der Wände eines Gebäudes eingebaut werden. Dies ermöglicht eine hohe Massgenauigkeit des Anmauerns an die Blockzarge, wodurch Wärmeverluste, wie sie beim nachträglichen Einbau zum Beispiel von Fenstern in Wandöffnungen, durch zu breite Fugen oder mangelhafte Fugendichtungen entstehen, vermieden werden. Da das Ausloten der Wände an den Fensteröffnungen und die Einpassung von Fenstern in Fensteröffnungen entfallen, können erhebliche Kostenvorteile bei den Herstellkosten eines Gebäudes erzielt werden. Auch sind Baufehler, zum Beispiel hinsichtlich der Einbaumasse nicht plangerechte Wandöffnungen praktisch ausgeschlossen, da die Blockzarge die Masse der Wandöffnung vorgibt. An die Blockzarge wird dann nachträglich der Blendrahmen befestigt, an dem die Glasscheibe entweder fest angebracht ist oder ein Flügelrahmen, der seinerseits die Glasscheibe trägt und geöffnet werden kann. Die Blockzarge stellt ein vorgefertigtes Teil dar, das bauseitig in die Wandstruktur eingearbeitet wird und an dem alle übrigen Teile des Fensters befestigt werden. Die Blockzarge wird also gewissermassen in die Wand des Gebäudes integriert und sie steht im allgemeinen auch nicht nach aussen oder innen aus der Wand heraus.

Bei der Blockzarge ist vorgesehen, dass am oberen Ende der Blockzarge über einem hinter der Fensteröffnung befindlichen Fensterraum ein Kasten angeordnet ist, der einen ersten Hilfsraum umschliesst, dass in dem Kasten mindestens eine Rolle für Vorhangbahnen enthalten ist, die breiter sind als der Blendrahmen und die in den Fensterraum hinein abwickelbar sind, und dass der Kasten an seiner Unterseite eine Zwischenwand mit Schlitzen für den Durchtritt der Vorhänge und mit Führungselementen zum Spreizen der einzelnen Vorhangbahnen aufweist.

Der Kasten für die Vorhangbahnen kann in vorteilhafter Weise ebenfalls mit dem Mauerwerk mit geringstmöglicher Fugenbreite umbaut werden, so dass die bei herkömmlicher Bauweise üblichen Undichtigkeiten im Bereich des Rolladenkastens vermieden werden.

Die Zwischenwand trennt den ersten Hilfsraum von dem Fensterraum und weist Schlitze für den Durchtritt der Vorhangbahnen sowie Führungselemente zum Spreizen der Vorhangbahnen auf. Die durch Spreizen der Vorhangbahnen im Fensterraum gebildeten Luftkammern werden hierbei an ihren oberen Enden durch die Zwischenwand verschlossen, so dass der Luftaustausch der Luftkammern unterbunden oder mindestens stark eingeschränkt wird. Bei aufgewickelten Vorhangbahnen kann das Licht ungehindert durch den Fensterraum hindurchdringen. Bei abgewickelten Vorhangbahnen wird der Fensterraum durch die Vorhangbahnen in mehrere Luftkammern unterteilt, in denen stehende Luft als wärmeisolierendes Medium vorhanden ist. Auf diese Weise erhält man eine sehr wirksame Wärmedämmung, ohne dass hierfür im Bereich des Fensters zusätzlicher Platz benötigt würde, mit Ausnahme des Kastens, in dem die Rollen angeordnet sind. Dieser Kasten befindet sich aber im Inneren der Wand und verkleinert nicht das nutzbare Volumen des Gebäudes. Die Vorhangbahnen sind breiter als der Blendrahmen des Aussenfensters und verbessern dadurch die Wärmedämmung auch im Bereich der Fenstereinfassung.

An der Blockzarge und/oder an den vertikalen, den Fensterraum begrenzenden Seitenflächen sind vertikale Führungsprofile angebracht, in die die Ränder der Vorhangbahnen eingreifen, und am unteren Ende der Fensteröffnung befinden sich horizontale Abschlussprofile, in die die unteren Kanten der Vorhangbahnen in abgewickeltem Zustand eintauchen.

Die Führungsprofile sind in der Art von Schlitzen ausgebildet, und dienen zur Erzielung dichter Luftkammern und zur Verhinderung von Luftzirkulation zwischen den Luftkammern, indem die Ränder der Vorhangbahn in die Schlitze der Führungsprofile eingreifen. Die am unteren Ende der Fensteröffnung angebrachten horizontalen Abschlussprofile ermöglichen den Eingriff der unteren Kanten der Vorhangbahnen, die vorzugsweise Beschwerungsschienen aufweisen. Auf diese Weise wird sichergestellt, dass bei entrollten Vorhangbahnen ein weitgehend luftdichter Abschluss der einzelnen Luftkammern erfolgt.

Die Führungsprofile bestehen vorzugsweise aus Steckprofilen, die je nach Anzahl der Vorhangbahnen miteinander kombinierbar sind. Dies ermöglicht eine einfache und schnelle Montage der Führungsprofile.

Die Blockzarge kann zum Gebäude hin abstehende vertikale Seitenwände und eine horizontale Boden- bzw. Dachwand aufweisen.

Auf diese Weise kann das Verputzen der zur Fensteröffnung weisenden Stirnflächen der Aussenwand entfallen, wobei die Aussenwand bis unmittelbar an die Seitenwände angemauert wird.

Bei einer bevorzugten Weiterbildung umschliesst die Blockzarge die Fensteröffnung sowie ein unter der Fensteröffnung befindliches Brüstungselement, hinter dem sich ein zweiter Hilfsraum zur Aufnahme von Klimageräten, Steuergeräten u.dgl. befindet.

Da der durchsichtige Fensterbereich erst in Brüstungshöhe beginnt, steht der Raum unterhalb des Fensterraums als Hilfsraum zur Verfügung. In diesem Raum können Antriebsaggregate, Steuerungsaggregate, Klimageräte, Wärmetauscher, Luftbefeuchter u. dgl. angeordnet sein. Ferner besteht die Möglichkeit, die Aussenwand des weiteren Hilfsraums als Sonnenkollektor auszubilden, der Wärme aus der Sonnenstrahlung und/oder der Umgebungsluft des Gebäudes aufnimmt und in das Gebäudeinnere überträgt. Ein derartiger Sonnenkollektor wird ebenfalls an der Blockzarge montiert und braucht daher nicht unmittelbar an der Gebäudewand, d.h. am Mauerwerk, befestigt zu werden.

Ein bevorzugtes Ausführungsbeispiel weist einen Installationsrahmen auf, der mindestens den Fensterraum umschliesst, an dem die Führungsprofile und Abschlussprofile befestigt sind und der mit der Blockzarge verbindbar ist.

Der Installationsrahmen stellt ein vorgefertigtes Teil dar, das nachträglich an der Blockzarge befestigt werden kann. Das hat den Vorteil, dass nach dem Einbau der Blockzarge zunächst der gesamte Rohbau einschliesslich des Verputzens fertiggestellt werden kann, bevor der Installationsrahmen, der dazu dient, die Vorhänge im Fensterraum aufzunehmen und im zweiten Hilfsraum Klimageräte u. dgl. aufzunehmen, eingebaut wird. Der Installationsrahmen kann komplett ausgestattet nachträglich mit der Blockzarge z. B. mit einer Steckverbindung verbunden werden. Auf diese Weise können die Montagearbeiten auf der Baustelle weitgehend entfallen, wobei die Bestückung des Installationsrahmens rationell, z. B. im Rahmen einer Fliessbandfertigung erfolgen kann. Durch den nachträglichen Einbau in der Endphase eines Bauprojektes können teure Bauelemente nicht in der Rohbauphase eines Gebäudes beschädigt oder entwendet werden.

Die Zwischenwand einschliesslich Vorhangbahnen und Rollen ist vorzugsweise als Einbaumodul für den Kasten ausgebildet. Dies ermöglicht eine schnelle nachträgliche Montage des Einbaumoduls in den Kasten.

Im folgenden werden unter Bezugnahme auf die Zeichnungen Ausführungsbeispiele der Erfindung näher erläutert.

Es zeigen:

Fig. 1 einen vertikalen Querschnitt durch eine Ausführungsform des wärmedämmenden Fensters,

Fig. 2 eine schematische Ansicht einer vorgefertigten Blockzarge von der Aussenseite des Gebäudes her,

Fig. 3 einen schematischen Querschnitt entlang der Linie III–III in Fig. 1,

Fig. 4 eine perspektivische Ansicht eines weiteren Ausführungsbeispiels einer Blockzarge mit Seitenwänden und eingebautem Kasten von der Innenseite des Gebäudes her,

Fig. 5 ein seitliches Führungsprofil für Vorhangbahnen,

Fig. 6 ein Abschlussprofil für Vorhangbahnen und

Fig. 7 ein weiteres Ausführungsbeispiel für ein Abschlussprofil.

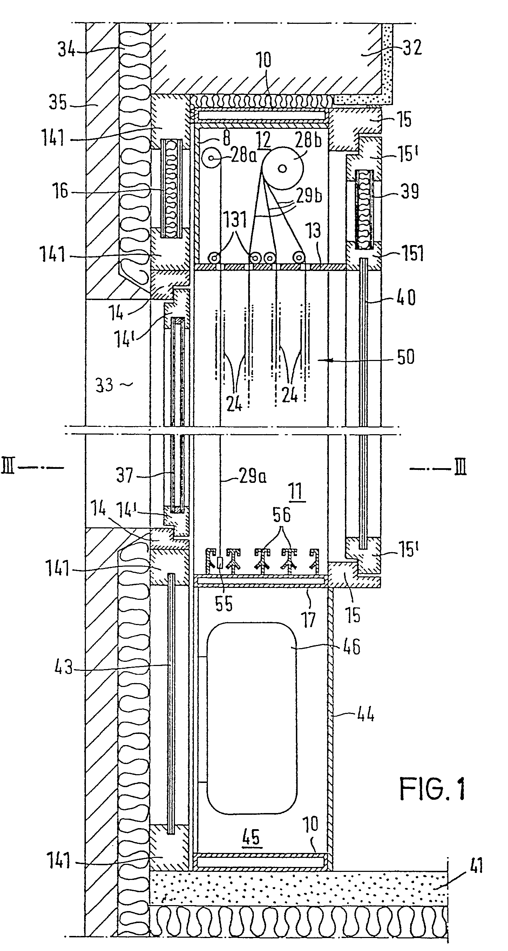

Wie aus Fig. 1 ersichtlich, ist hinter einem Blendmauerwerk 35 und einer Isolierung 34 in einer Wandöffnung ein wärmedämmendes Fenster eingebaut, das auf einem Fussboden 41 steht und von der Aussenwand 32 umschlossen ist. Das wärmedämmende Fenster weist eine rechteckige und rahmenförmige Blockzarge 1 auf, die die Wandöffnung ausfüllt.

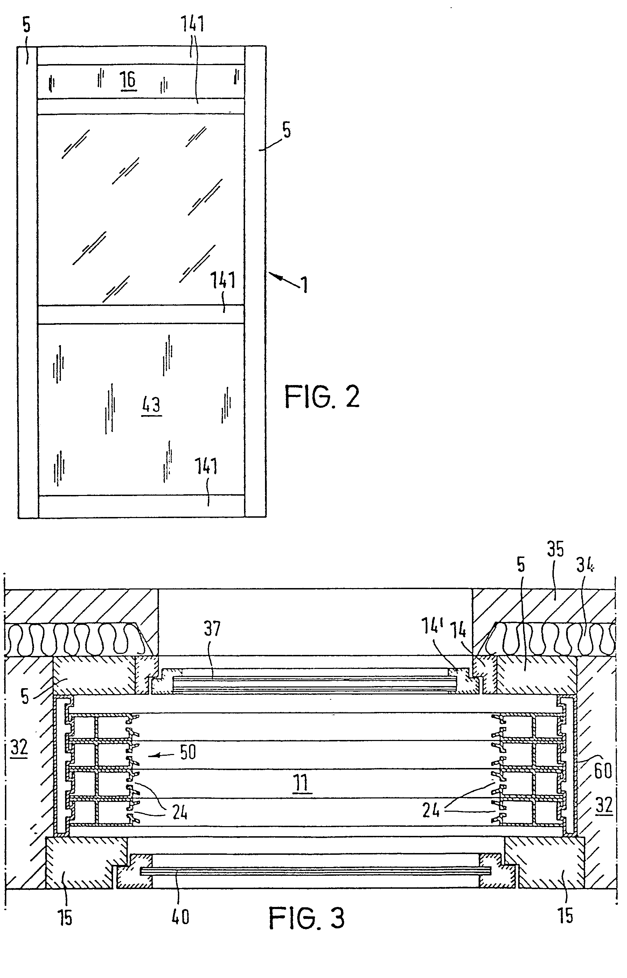

Die in Fig. 2 gezeigte Blockzarge 1 umschliesst eine Fensteröffnung sowie ein unter der Fensteröffnung befindliches Brüstungselement 43.

Die Blockzarge 1 wird bei einem Neubau nach Einzug des Bodens 41 bzw. einer Zwischendecke an einer im Architektenplan ausgewiesenen Stelle aufgestellt und zunächst behelfsmässig fixiert. Anschliessend wird die Aussenwand 32 direkt an den seitlichen Aussenrändern der Blockzarge 1 hochgemauert, so dass zwischen der Aussenwand 32 und der Blockzarge 1 nahezu keine Fuge verbleibt. Dabei ist die Blockzarge 1 vorzugsweise bündig mit der Aussenwandebene angeordnet. Vor der Aussenwand 32 kann eine Isolierung 34 und ein Blendmauerwerk 35 vorgesehen sein, die im Bereich des Brüstungselementes 43 und im oberen Bereich der Blockzarge 1 durchgehend sind.

Die Blockzarge 1 besteht vorzugsweise aus rechteckigen, quadratischen oder profilierten Kanthölzern 5 und horizontalen Querträgern. Die Blockzarge kann auch aus einem Kunststoffprofil oder Metallprofil hergestellt sein. Am unteren Ende der Fensteröffnung befindet sich ein horizontaler Querträger 141, der gleichzeitig den oberen Abschluss des Brüstungselementes 43 bildet und zwischen den vertikalen Kanthölzern 5 verläuft. Das Brüstungselement 43 besteht zum Beispiel aus einer formverleibten Hartfaserplatte mit Isolierung oder aus einem Kunststoffelement und kann Luftaustauschöffnungen 6 für einen hinter dem Brüstungselement 43 zu installierenden Wärmetauscher aufweisen. Die zum Gebäudeinneren gewandte Seite des Brüstungselementes 43 kann mit einer Reflektionsfolie zur Verbesserung der Wärmedämmung beschichtet sein.

An dem aussenseitigen Ende der Blockzarge 1 ist im Bereich der Fensteröffnung an der inneren Umfangskante der durch die Kanthölzer 5 und die Querträger 141 umgebenen Fensteröffnung eine umlaufende Aussparung vorgesehen, die den Blendrahmen 14 eines Aussenfensters aufnimmt. Der Blendrahmen 14 ist gegen die Stirnseite der Blockzarge 1 gesetzt und mit (nicht dargestellten) Befestigungsmittel und unter Zwischenlage geeigneter Dichtungen mit der Blockzarge 1 verbunden. Als Befestigungsmittel kommt zum Beispiel eine Nut- und Federverbindung des Blendrahmens 14 mit der Blockzarge 1 in Frage, die die wärmtechnische Abdichtung zwischen Blockzarge 1 und Blendrahmen 14 verbessert. Alternativ können die Führungsprofile 50 auch aus einem Holzprofil bestehen, in das Nuten zur Aufnahme der Beschwerungsschiene bzw. der überstehenden unteren Kante der Vorhangbahnen eingefräst sind. Der Blendrahmen 14 besteht aus bekannten Fensterprofilen. Er enthält einen Flügelrahmen, der vorzugsweise nach innen zu öffnen ist, so dass durch das geöffnete Fenster sowohl vom Gebäudeäusseren als auch vom Gebäudeinneren direkter Zugang zum Fensterraum 11 besteht.

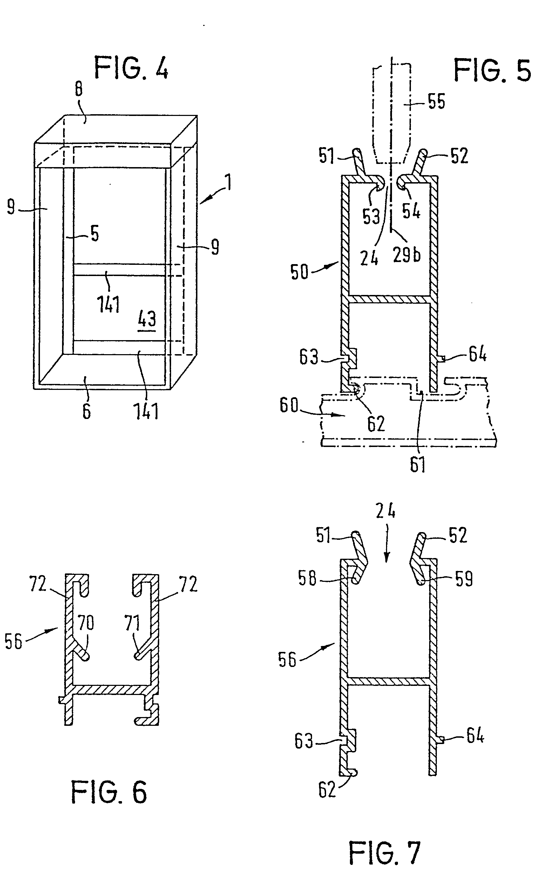

Von den vertikalen Kanthölzern 5 und den horizontalen Querträgern können wie aus Fig. 4 ersichtlich bündig mit der Aussenkante der Blockzarge 1 Seitenwände 9 sowie Dach- und Bodenwände 6, 7 zum Gebäudeinneren derart abstehen, dass sie mit der Innenseite der Aussenwand 32 bündig abschliessen. Die Seiten-, Dach- und Bodenwände ermöglichen ein vollständiges Ummauern der Blockzarge 1 ohne dass die die Wandöffnung bildenden Stirnflächen der Aussenwand 32 verputzt werden müssen.

Nach dem Einbau der Blockzarge 1 kann zunächst der gesamte Rohbau einschliesslich der Putzarbeiten beendet werden, bevor zusätzliche Bestandteile des wärmedämmenden Fensters eingebaut werden.

Gemäss Fig. 2 schliesst die Blockzarge 1 an ihrem oberen und unteren Ende jeweils mit einem weiteren Querträger 141 ab. Anstelle des oberen Querträges 141 kann auch ein Kasten 8 gemäss Fig. 2 vorgesehen sein, der einen Hilfsraum 12 umschliesst. An dieser Blockzarge 1 ist ein Kasten 8 angebracht, der Rollen für eine Rollade bzw. einen Sichtschutz und/oder für wärmedämmende Vorhänge enthält. Der Kasten 8 kann entweder zur Gebäudeinnenseite offen sein, und/oder zum Fensterraum 9 hin, um den späteren Einbau von Vorhängen 29 zu ermöglichen. Die Tiefe des Kastens ist vorzugsweise der Wandstärke der Aussenwand 32 angepasst. Der Hilfsraum 12 ist durch eine fest an der Blockzarge 1 angebrachte Blende 16 nach aussen hin verschlossen. Die aussenseitige Isolierung 34 und das Blendmauerwerk 35 verlaufen in Höhe des Hilfsraums 12 durchgehend entlang der Blockzarge 1.

Der Kasten 8 enthält eine erste Rolle 28a, auf der beispielsweise ein Sichtschutz- oder Sonnenschutzvorhang 29a aufgewickelt ist, sowie eine zweite Rolle 28b, auf der mehrere wärmedämmende Vorhangbahnen 29b aufgewickelt sind. Die Rollen sind mit horizontalen Achsen drehbar im Kasten 8 gelagert. Sämtliche Rollen 28a, 28b können durch einen (nicht dargestellten) elektrischen Antriebsmechanismus angetrieben werden, um alle Vorhangbahnen 29a, 29b aufzurollen, bzw. zu entrollen. Es ist auch möglich, die Vorhangbahnen 29a, 29b individuell zu steuern. Die Vorhangbahnen bestehen vorzugsweise aus transparenten Folien, mit geringem Lichtverlust, die in der Heizperiode auch am Tage den Fensterraum 11 in mehrere Luftkammern 30 unterteilen. Die Vorhangbahnen sind breiter als der Blendrahmen des Aussenfensters und verbessern dadurch nicht nur die Wärmedämmung des Fensters, sondern auch des Blendrahmens. Zusätzlich zu den Vorhangbahnen 29b aus transparenten Folien kann am Tage eine Sonnenschutzfolie abgewickelt werden, die gleichzeitig auch in der Nacht als Reflektionsfolie verwendet werden kann, wenn diese Folie beidseitig mit einer Reflexschicht beschichtet ist. Die Vorhangbahnen 29a, 29b werden durch eine horizontale Zwischenwand 13 geführt, die den unteren horizontalen Abschluss des Kastens 8 bildet. Diese Zwischenwand weist schlitzförmige Durchlässe für die einzelnen Vorhangbahnen 29a, 29b auf. Die Zwischenwand 13 mit den auf den Rollen 28a, 28b aufgewickelten Vorhangbahnen 29a, b lässt sich als modularer Einschub in den Kasten 8 von vorne einschieben. Die Rollen 28a, 28b sind dabei in (nicht dargestellten) vertikalen Wänden gelagert, die von der Zwischenwand nach oben abstehen. Der Kasten 8 kann auch nur unten offen sein, so dass in diesem Fall der Einbau des modularen Einschubs von unten erfolgt.

Jede der Vorhangbahnen 29a, 29b ist mit ihren Seitenkanten in Schlitzen 24 geführt, die in Führungsprofilen 50 verlaufen, so dass im Fensterraum 11 zwischen zwei Vorhangbahnen 29a, 29b jeweils eine abgeschlossene Luftkammer 30 gebildet werden kann.

Die Führungsprofile 50 sind an den seitlichen Stirnflächen der Aussenwand 32 angeordnet und entweder an der zum Gebäudeinnern gewandten Stirnfläche der Blockzarge 1 oder an der Blockzarge und an den Stirnflächen der Aussenwand befestigt. Bei der Blockzarge gemäss Fig. 4 sind die Führungsprofile an den Seitenwänden 9 befestigt.

Die Führungsprofile bestehen aus kastenförmigen Hohlprofilen, die in einem Stecksystem derart verbunden werden können, dass mehrere Schlitze 24 entsprechend der Anzahl der Vorhangbahnen nebeneinander mit geringem Abstand angeordnet werden können. Die zusammengefassten Profile lassen sich dann vorteilhaft gemeinsam montieren.

Die Führungsprofile weisen beiderseits der Schlitze 24 jeweils eine schräg von dem Schlitz abstehende Schiene 51, 52 auf, die gemeinsam eine im wesentlichen V-förmige Führung für an den Enden der Vorhangbahnen angebrachte Beschwerungsschienen bildet. Die Breite der Beschwerungsschienen 55 ist dem freien Raum zwischen den beiderseits der Fensteröffnung angeordneten Führungsprofilen 50 angepasst, während die Vorhangbahnen selbst durch die Schlitze 24 darüber hinaus in den Hohlraum der Führungsprofile eintreten. Dabei kann die nicht mit der Beschwerungsschiene abschliessende seitlich überstehende Kante mit einer Versteifung als Knickschutz versehen sein.

Die Schlitzöffnung weist darüber hinaus an ihren inneren im Hohlprofil befindlichen Rändern jeweils vom Schlitz nach aussen gebogene Stege 53, 54 auf, die ein einwandfreies Gleiten der Vorhangbahnen 29a, 29b in den Schlitzen 24 gewährleisten. Den unteren horizontalen Abschluss des Fensterraums 11 bilden den seitlichen vertikalen Führungsprofilen weitgehend entsprechende Abschlussprofile 56, die die Enden der Vorhangbahnen 29a, 29b abdichtend aufnehmen. Die Enden der Vorhangbahnen 29a, 29b sind wie erwähnt mit Beschwerungsschienen 55 versehen, die in die Abschlussprofile 56 eintauchen. Die Abschlussprofile sind an dem Querträger 141 der Blockzarge befestigt. Sie können auch an den seitlichen Führungsprofilen 50, mit denen sie einen U-förmigen Rahmen bilden, befestigt sein.

Die Schlitze 24 der kastenförmigen, ebenfalls mit einem Stecksystem kombinierten Abschlussprofile 56 ermöglichen das Eintauchen der Beschwerungsschienen. Dabei sind die Abschlussprofile so tief, dass auch ein gewisser Längenausgleich für die Vorhangbahnen 29a, b möglich ist.

Die Schlitzränder der Abschlussprofile sind nach innen umgebogen und im Inneren des Hohlprofils stehen zwei schräg nach unten weisende Schienen 70, 71 von den vertikalen Wänden 72 der Abschlussprofile 56 ab, die einerseits einen Luftaustausch zwischen benachbarten Luftkammern 30 verhindern und andererseits die Beschwerungsschienen 55 führen, so dass die Beschwerungsschienen in den Abschlussprofilen nicht verhaken können.

Fig. 7 zeigt ein weiteres Ausführungsbeispiel für ein Abschlussprofil 56, mit im wesentlichen V-förmig von dem Schlitz nach aussen abstehenden Schienen 51, 52 das weitgehend dem seitlichen Führungsprofil 50 entspricht. Lediglich der Schlitz 24 ist für den Durchlass der Beschwerungsschienen bis zu den abstehenden Schienen 51, 52 erweitert. Dabei dienen die abstehenden Schienen zur Einführung der Beschwerungsschienen in die Schlitze 24. Im Inneren des Abschlussprofils sind an der Schlitzöffnung spiegelbildlich zu den abstehenden Schienen 51, 52 zwei weitere Schienen 58, 59 angeordnet, die ein Verhaken der Beschwerungsschienen im Abschlussprofil beim Aufwickeln der Vorhänge verhindern sollen.

In dem Hilfsraum 45 unterhalb des Fensterraums 11 sind Klimageräte 46, nicht dargestellte Wärmetauscher, Luftbefeuchter, elektrische Antriebe, Leitungen, Steuergeräte oder andere Teile untergebracht.

Um den nachträglichen Einbau sämtlicher Teile des wärmedämmenden Fensters ausser der Blockzarge 1 und des Aussenfensters in einer modularen Baueinheit zu verwirklichen, ist gemäss Fig. 1 ein Installationsrahmen 10 vorgesehen, der im wesentlichen die gleichen Aussenabmessungen wie die Blockzarge 1 aufweist und dessen Rahmenprofil 60 vorzugsweise aus einem Hohlprofil besteht. Der Installationsrahmen 10 ist gegen die zum Gebäude hingewandte Stirnseite der Blockzarge 1 gesetzt und mit (nicht dargestellten) Befestigungsmitteln und unter Zwischenlage geeignete Dichtungen mit der Blockzarge 1 und/oder der seitlichen Stirnfläche der Aussenwand 32 verbunden. Weist die Blockzarge 1 Seitenwände 9, Dach- oder Bodenwände 6, 7 auf, sind die Aussenabmessungen des Installationsrahmens 10 entsprechend reduziert, so dass der Installationsrahmen in die Blockzarge 1 eingefügt werden kann und mit den Seitenwänden 9 und/oder mit der Blockzarge 1 verbunden werden kann.

Der Installationsrahmen 10 besteht aus einer Bodenwand 17, einer Deckenwand 18 und zwei Seitenwänden 19, 20, die sämtlich die gleiche Breite haben, so dass ein kastenförmiger Rahmen mit offenen Hauptflächen gebildet wird. Die Hauptflächen werden zur Innenseite des Gebäudes durch das Innenfenster 40 bzw. durch eine Blende 44 im Brüstungsbereich verschlossen.

Sämtliche Wände 17 bis 20 des Installationsrahmens 10 bestehen aus dem gleichen Profil, das einen sich über die gesamte Tiefe des Installationsrahmens erstreckenden, im wesentlichen rechteckigen Kasten 21 aufweist, der den äusseren Teil der modularen Baueinheit bildet.

Die seitlichen vertikalen Führungsprofile 50 und die horizontalen Abschlussprofile 56 sind vorzugsweise als Steckprofile mit dem Rahmenprofil des Installationsrahmens 10 verbunden. Fig. 5 zeigt ein Beispiel für ein seitliches Führungsprofil und dessen formschlüssige Steckverbindung mit dem Rahmenprofil des Installationsrahmens 10. Das Rahmenprofil 60 weist auf seiner zur Fensteröffnung gewandten Fläche mehrere Nuten 61 auf, die an ihrer einen Flanke hinterschnitten sind. In dem hinterschnittenen Teil greift eine parallel zum Nutgrund verlaufende Nase 62 der als Steckprofile gestalteten Führungs- bzw. Abschlussprofile ein, die von einer Aussenwand der Profile absteht. Zusätzlich weist jeweils die Aussenwand mit der Nase 62 eine längsverlaufende Aussparung 63 und die jeweils andere Aussenwand ein dieser Aussparung entsprechenden längsverlaufender Vorsprung 64 auf. Beim Zusammenfügen der Profile mit dem Rahmenprofil 60 greifen die Vorsprünge 64 in die Aussparungen 63 benachbarter Profile ein, so dass die aneinander angrenzenden Aussenwände der Profile gemeinsam über die Nase 62 in der hinterschnittenen Nut 61 des Rahmenprofils 60 gehalten werden.

Die beiden seitlichen vertikal verlaufenden Führungsprofile und die Abschlussprofile umrahmen den Fensterraum 11 U-förmig. Dabei verengen sie nicht die freie Fensteröffnung, so dass der Lichteinfall durch das wärmedämmende Fenster nicht beeinträchtigt wird.

Der Installationsrahmen kann in seinem Rahmenprofil Öffnungen für Installationsanschlüsse und Kabelverbindungen aufweisen.

Vorzugsweise wird der vorgefertigte, massgenaue Installationsrahmen in einem Fertigungsbetrieb vollständig mit den gewünschten Fensterbauteilen, einschliesslich der im Hilfsraum anzuordnenden Installation für die Klimatisierung von Wohnräumen ausgerüstet und dann als komplette Baueinheit in der Endphase eines Bauprojekts an der Blockzarge 1 befestigt.

Die Fertigung der Baueinheit ist z.B. am Fliessband möglich, wodurch die Herstellung erheblich rationalisiert werden kann. Insbesondere entfällt die aufwendige Einzelmontage einzelner Fensterelemente an der Baustelle.

Der Fensterraum 11 ist zum Gebäudeinneren hin durch das Innenfenster abgeschlossen, das grösser als das Aussenfenster ist und das mit einem Blendrahmen 15 am Installationsrahmen 10 befestigt ist. Durch das im Vergleich zum Aussenfenster grössere Innenfenster ist die Lichtausbeute des wärmedämmenden Fensters vergrössert, wobei die Führungsprofile 50 und die Abschlussprofile 56 durch den Blendrahmen 15 des Innenfensters verdeckt bleiben und nicht in die Fensteröffnung hineinragen. Der Blendrahmen 15 kann alternativ auch an der Aussenmauer 32 befestigt sein.

Das Innenfenster erstreckt sich bis zur Oberkante der Blockzarge 1, so dass beim Öffnen des Flügels des Innenfensters nicht nur Zugang zum Fensterraum 11, sondern auch zum Hilfsraum 12 besteht. Der Hilfsraum 12 wird dabei von einer undurchsichtigen Blende 39 verschlossen, die sich zwischen dem oberen Ende des Fensterflügels 15′ und einem Quersteg 151 erstreckt.

Wenn die Blockzarge an ihrem oberen Ende bereits einen Kasten 8 aufweist und wenn dieser Kasten nur nach unten offen ist, endet die obere Kante des Blendrahmens 15 am Kasten 8.

Der Wärmedämmwert des wärmedämmenden Fensters im Bereich des Hilfsraums 12 des Hilfsraums 45 und des Fensterraums 11 ist weitgehend einheitlich mit dem Wärmedämmwert des gesamten Aussenmauerwerks, so dass eine Bauphysikalische Optimierung der Aussenfassade erreicht wird und insbesondere im Fensterraum 11 und an dem Blendrahmen im Fensterraum keine Kondensatbildung entsteht.

## Patentansprüche

1. Wärmedämmendes Fensterelement in einer Wandöffnung (33) eines Gebäudes, mit einem Aussenfenster mit Blendrahmen (14) und mit einem im Fensterraum (11) hinter dem Fenster angeordneten Vorhang, der von einem über dem Fensterraum (11) angeordneten Hilfsraum (12) in den Fensterraum (11) abwickelbar und in seitlichen Führungselementen (50) geführt ist, wobei der Blendrahmen (14) des Aussenfensters an einer die Wandöffnung (33) umfangsmässig begrenzenden Blockzarge (1) befestigt ist und die seitlichen Führungselemente (50) an der Blockzarge (1) angeordnet sind, dadurch gekennzeichnet,
– dass der Vorhang aus mehreren Vorhangbahnen (29) besteht, die von mindestens einer Rolle (28a, 28b) abwickelbar sind,
– der Hilfsraum (12) von dem Fensterraum (11) durch eine Zwischenwand (13) mit Schlitzen für den Durchtritt der Vorhangbahnen (29) und mit Führungselementen (131) zum Spreizen der einzelnen Vorhangbahnen (29) abgetrennt ist,
– am unteren Ende des Fensterraums (11) unterhalb des Blendrahmens (14) horizontale Abschlussprofile (56) angeordnet sind, in die die unteren Kanten der Vorhangbahnen (29) im abgewickelten Zustand eintauchen, und
– die Vorhangbahnen derart breiter sind als der Blendrahmen (14), dass eine Wärmedämmung auch im Bereich der Fenstereinfassung erfolgt.

2. Wärmedämmendes Fensterelement nach Anspruch 1, dadurch gekennzeichnet, dass die Führungselemente (50) und Abschlussprofile (56) aus Steckprofilen bestehen, die je nach Anzahl der Vorhangbahnen (29) miteinander kombinierbar sind.

3. Wärmedämmendes Fensterelement nach Anspruch 1 oder 2, dadurch gekennzeichnet, dass die Blockzarge (1) zum Gebäude hin abstehende vertikale Seitenwände (9) und eine horizontale Boden- bzw. Dachwand (6, 7) aufweist.

4. Wärmedämmendes Fensterelement nach einem der Ansprüche 1 bis 3, dadurch gekennzeichnet, dass die Blockzarge (1) die Fensteröffnung sowie ein unter der Fensteröffnung befindliches Brüstungselement (43) umschliesst, hinter dem sich ein zweiter Hilfsraum (45) zur Aufnahme von Klimageräten, Steuergeräten u. dgl. befindet.

5. Wärmedämmendes Fensterelement nach einem der Ansprüche 1 bis 4, dadurch gekennzeichnet, dass ein Installationsrahmen (10) vorgesehen ist, der mindestens den Fensterraum (11) umschliesst, an dem die Führungsprofile (50) und Abschlussprofile (56) befestigt sind und der mit der Blockzarge (1) verbindbar ist.

6. Wärmedämmendes Fensterelement nach einem der Ansprüche 1 bis 5, dadurch gekennzeichnet, dass der Fensterraum (11) zum Gebäudeinnern hin durch mindestens eine weitere Glasscheibe (40) in einem Innenfenster begrenzt ist, das grösser ist als das Aussenfenster.

7. Wärmedämmendes Fensterelement nach Anspruch 6, dadurch gekennzeichnet, dass der Kasten (8) und der Blendrahmen (15) des Innenfensters am Installationsrahmen (10) befestigt sind.

8. Wärmedämmendes Fensterelement nach einem der Ansprüche 1 bis 7, dadurch gekennzeichnet, dass der Blendrahmen (15) des Innenfensters an der Aussenmauer (32) befestigt ist.

9. Wärmedämmendes Fensterelement nach einem der Ansprüche 2 bis 8, dadurch gekennzeichnet, dass die Zwischenwand (13) einschliesslich Vorhangbahnen (29) und Rollen (28) als Einbaumodul für den Kasten (8) ausgebildet ist.

## Revendications

1. Elément formant fenêtre thermiquement isolante dans une ouverture (33) de la paroi d'un bâtiment, comportant une fenêtre extérieure avec un dormant (14) et un rideau qui est disposé dans un espace (11) de la fenêtre situé derrière la fenêtre, qui, depuis un espace auxiliaire (12) disposé au-dessus de l'espace (11) de la fenêtre, peut se dérouler dans l'espace (11) de la fenêtre et qui est guidé dans des éléments latéraux de guidage (50), étant précisé que le dormant (14) de la fenêtre extérieure est fixé à un précadre (1) qui limite l'ouverture (33) de la paroi sur sa périphérie et étant précisé que les éléments latéraux de guidage (50) sont disposés contre le précadre (1), caractérisé

– en ce que le rideau est constitué de plusieurs bandes de rideau (29) qui peuvent se dérouler depuis au moins un rouleau (28a, 28b),

– en ce que l'espace auxiliaire (12) est séparé de l'espace (11) de la fenêtre par une paroi intermédiaire (13) qui présente des fentes pour le passage des bandes de rideau (29), ainsi que des éléments de guidage (131) pour assurer l'écartement des différentes bandes de rideau (29),

– en ce qu'à l'extrémité inférieure de l'espace (11) de la fenêtre sont disposés, sous le dormant (14) des profilés horizontaux d'arrêt (56) dans lesquels les bords inférieurs des bandes de rideaux (29) pénètrent à l'état déroulé, et

– en ce que les bandes de rideaux sont plus larges que le dormant (14) de façon qu'il se fasse également une isolation thermique dans la zone de l'encadrement de la fenêtre.

2. Elément formant fenêtre thermiquement isolante selon la revendication 1, caractérisé en ce que les éléments de guidage (50) et les profilés d'arrêt (56) sont constitués de profilés enfichables qui peuvent se combiner l'un avec l'autre selon chaque fois le nombre des bandes de rideau (29).

3. Elément formant fenêtre thermiquement isolante selon la revendication 1 ou 2, caractérisé en ce que le précadre (1) présente des parois latérales verticales (9) et une paroi horizontale de plancher ou de plafond (6, 7) qui s'en détachent en direction du bâtiment.

4. Elément formant fenêtre thermiquement isolante selon l'une des revendications 1 à 3, caractérisé en ce que le précadre (1) entoure l'ouverture de la fenêtre ainsi qu'une allège (43) qui se trouve sous l'ouverture de la fenêtre et derrière laquelle se trouve un second espace auxiliaire (45) pour recevoir des appareils de climatisation, des appareils de commande et analogues.

5. Elément formant fenêtre thermiquement isolante selon l'une des revendications 1 à 4, caractérisé en ce qu'il est prévu un cadre d'installation (10) qui entoure au moins l'espace (11) de la fenêtre, auquel sont fixés les profilés de guidage (50) et les profilés d'arrêt (56), et qui peut être relié au précadre (1).

6. Elément formant fenêtre thermiquement isolante selon l'une des revendications 1 à 5, caractérisé en ce que l'espace (11) de la fenêtre est limité, en direction de l'intérieur du bâtiment, par au moins une autre vitre (40) montée dans une fenêtre intérieure qui est plus grande que la fenêtre extérieure.

7. Elément formant fenêtre thermiquement isolante selon la revendication 6, caractérisé en ce que le caisson (8) et le dormant (15) de la fenêtre intérieure sont fixés au cadre d'installation (10).

8. Elément formant fenêtre thermiquement isolante selon l'une des revendications 1 à 7, caractérisé en ce que le dormant (15) de la fenêtre intérieure est fixé à la maçonnerie extérieure (32).

9. Elément formant fenêtre thermiquement isolante selon l'une des revendications 2 à 8, caractérisé en ce que la paroi intermédiaire (13), y compris les bandes de rideaux (29) et les rouleaux (28), est conçue sous forme de module encastrable pour le caisson (8).

## Claims

1. Thermally insulating window element in a wall opening (33) of a building, having an outer window with a blind frame (14) and a curtain arranged in the window space (11) behind the window, which curtain is adapted to be reeled off from an auxiliary space (12) above said window space (11) and into the window space (11) and is guided in lateral guiding elements (50), the blind frame (14) of the outer window being fastened to a block case (1) circumferentially limiting said wall opening (33), and said lateral guiding elements (50) being arranged at the block case (1), characterized in

– that the curtain consists of a plurality of curtain sheets (29) to be reeled off from at least one roll (28a, 28b),

– the auxiliary space (12) is separated from the window space (11) by a partition wall (13) having slots for the passage of said curtain sheets (29) and guiding elements (131) for spreading the individual curtain sheets (29),

– horizontal end profiles (56) are arranged at the lower end of the window space (11) and below the blind frame (14), into which end profiles the lower edges of the curtain sheets (29) are immersed in a reeled-off condition, and

– the curtain sheets are wider than the blind frame (14) in such a manner that thermal insulation is effected also in the peripheral area of the window.

2. Thermally insulating window element according to claim 1, characterized in that the guiding elements (50) and the end profiles (56) consist of plug-in profiles which can be combined with each other according to the respective number of curtain sheets (29).

3. Thermally insulating window element according to claim 1 or 2, characterized in that the block case (1) is provided with vertical side walls (9) projecting towards the building and with a horizontal bottom or roof wall (6, 7), respectively.

4. Thermally insulating window element according to any one of claims 1 to 3, characterized in that the block case (1) encloses the window opening and a parapet element (43) arranged under the window opening, behind which parapet element a second auxiliary space (45) is arranged for accomodating air-condition devices, control devices and the like.

5. Thermally insulating window element according to any one of claims 1 to 4, characterized in that an installation frame (10) is provided which encloses at least the window space (11) and has the guiding elements (50) and end profiles (56) secured thereto and is connectable to the block case (1).

6. Thermally insulating window element according to any one of claims 1 to 5, characterized in that the window space (11) is limited towards the interior of the building by at least one additional glass pane (40) in an inner window being larger than the outer window.

7. Thermally insulating window element according to claim 6, characterized in that the box (8) and the blind frame (15) of the inner window are secured to the installation frame (10).

8. Thermally insulating window element according to any one of claims 1 to 7, characterized in that the blind frame (15) of the inner window is secured to the outer wall (32).

9. Thermally insulating window element according to any one of claims 2 to 8, characterized in that the partition wall (13), including the curtain sheets (29) and the rolls (28), is provided as a built-in module for the box (8).

FIG.1

FIG. 2

FIG. 3

# FIG. 4

8
9
1
5
9
141
43
141
6

# FIG. 5

55
51
52
53
54
50
24
29 b
63
64
60
62
61

# FIG. 6

72
72
70
71
56

# FIG. 7

24
51
52
58
59
56
63
64
62